**Europäisches Patentamt**

(19) **European Patent Office**

**Office européen des brevets**

(11) Publication number: **0 000 321**

**B1**

(12) **EUROPEAN PATENT SPECIFICATION**

(45) Date of publication of patent specification: **08.12.82**

(21) Application number: **78850004.9**

(22) Date of filing: **26.06.78**

(51) Int. Cl.³: **B 65 G 7/04** //B65G67/02

(54) **Load handling apparatus for loading and unloading of transport vehicles.**

(30) Priority: **27.06.77 SE 7707375**

(43) Date of publication of application:
**10.01.79 Bulletin 79/1**

(45) Publication of the grant of the patent:
**08.12.82 Bulletin 82/49**

(84) Designated Contracting States:
**BE CH DE FR GB LU NL**

(56) References cited:
**FR - A - 2 065 039**
**FR - A - 2 122 015**
**FR - A - 2 219 094**
**GB - A - 1 316 267**

(73) Proprietor: **Nordström, Claes Fredrik**
**Sigvard Grubbesgatan 12**
**S-230 40 Bara (SE)**

(72) Inventor: **Nordström, Claes Fredrik**
**Sigvard Grubbesgatan 12**
**S-230 40 Bara (SE)**

(74) Representative: **Wallin, John Erik**
**AWAPATENT AB Box 5117**
**S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Load handling apparatus for loading and unloading of transport vehicles

This invention relates to a load-handling apparatus for loading and unloading of transport vehicles, particularly palletized goods but also other goods which like palletized goods permit the insertion of lift arms beneath the goods between said goods and a base.

It has been established by way of time studies that only about half the terminal time for loading and unloading of road vehicles is a tolerably effective work time while the other half of the terminal time is spent in waiting. The waste times and the effective work times are thus approximately equal, and it goes without saying that the waiting time costs which the consumer has to pay in the price of the merchandise, are considerable.

Another disadvantage residues in that the goods handling operation proper is not carried out as effectively as is desired, because of deficient methods and load handling equipment. The transported goods to a great extent are palletized or unitized goods, and the load handling technique at the terminal proper has made use of this face for effectivization of the goods handling technique. A relatively small number of load carrying vehicles are also equipped with fixed conveying installations (roller conveyers, conveyer belts) which permit rapid transfer of goods between the terminal and the vehicle, but this solution involves considerable disadvantages. It may be mentioned by way of example that it is expensive to equip every individual vehicle with a fixed load handling apparatus which besides would often impede using the vehicle for goods which cannot be handled by means of load handling apparatuses of this kind. It can therefore be established that the vehicles but very rarely are equipped with load handling apparatuses and therefore have to queue up waiting for assistance from the equipment of the goods terminal, which mostly is of such a type that loading and unloading will be both time-consuming and exacting.

The problem underlying the invention is that the loading and unloading systems utilized at present require an expensive and relatively heavy equipment which is fixedly mounted on the vehicle platform; besides they are relatively slow and require heavy manual work. By their fixed mounting on the vehicle they restrict the usefulness of the vehicle for transporting goods of varying kind, such as gravel in alternation with palletized goods.

The alternative is handling by industrial trucks which require much more personnel and a considerably longer loading time per vehicle. Similarly, a loading device has been suggested in GB—A—1 316 267 in which a so-called "slipper device", provided with rollers on its upper and lower surfaces can be positioned beneath palletized goods, and its upper roller carrying surface can be raised to allow goods to be rolled along it. Other alternatives have also been suggested. For loading and unloading of containers from road vehicles there has been suggested a mobile conveyer comprising a frame and a longitudinally extensible, so-called "bellows type" structure, viz. a structure which can be extended to several times its collapsed length and is provided with a roller or wheel path which receives the goods from a conveyer on the frame and on which the goods can be conveyed onto the road vehicle where they are transferred manually from the end of the "accordion conveyer". This device can also be used for unloading and then requires that the goods are lifted onto the "bellows type" conveyer.

A variant of this loading apparatus includes instead of the "bellows type" conveyer a pivotally mounted belt conveyer, the loading apparatus being positioned laterally of the vehicle with the conveyer pivoted so as to extend inwardly over the platform. This conveyer requires that the vehicle platform is accessible from the side and necessitates heavy manual work for lifting off and lifting on goods, on loading and unloading.

It has also been suggested to use belt conveyers which can be moved in over a vehicle platform longitudinally thereof either with a cantilever arm or an arm supported on the vehicle platform. Also in this case heavy manual work is required for lifting the goods at least when unloading is to be effected.

The object of the present invention is to provide an apparatus which may be used in a load handling system for relatively rapid and easy loading and unloading of goods of the kind indicated in the foregoing. Another object is to provide an apparatus which will eliminate heavy manual work and does not bind the vehicle to the transport of unitized goods, such as palletized goods or goods equivalent from the view point of handling.

The apparatus according to the invention comprises, for lifting and moving palletized or other goods, a pair of load-handling members which are insertable from a supporting surface in a pair of through channels or equivalent openings of restricted width and height existing or arranged between the goods and the supporting surface for permitting insertion of the lift forks of a forklift truck of other lifting means beneath the goods, said load-handling members having the form of two substantially identical elongated parallel units each of which consists of a lower supporting section and an upper lifting section raisably and lowerably mounted on said supporting section, the lower supporting section (15) having supporting rollers (18) for supporting said apparatus movably on said supporting surface and said upper lifting section (16) having rollers (17) forming its upper surface for conveying goods along said upper surface, and is characterized in that the supporting sections of the two units are interconnected at their one end portions by a transverse connecting device so that the load-handling apparatus forms a fork-like structure with the two units extending from the transverse connecting device in parallel with and laterally spaced from one another, that the lifting sections of the two units are collectively raisable and lowerable, and that the fork-like load-handling apparatus forms an extension section of a telescopically extensible conveyer.

By means of the apparatus according to the invention loaded pallets or other goods can be easily lifted and moved in relation to a supporting surface, for example from a load carrying platform of a lorry onto a loading dock, a conveyer or another load carrying vehicle. An apparatus according to the invention can be supported on a load carrying platform of a vehicle for loading or unloading of goods or can be positioned at a loading or unloading station, such as a loading dock.

The invention is described in greater detail hereinbelow with reference to the accompanying diagrammatic drawings in which:—

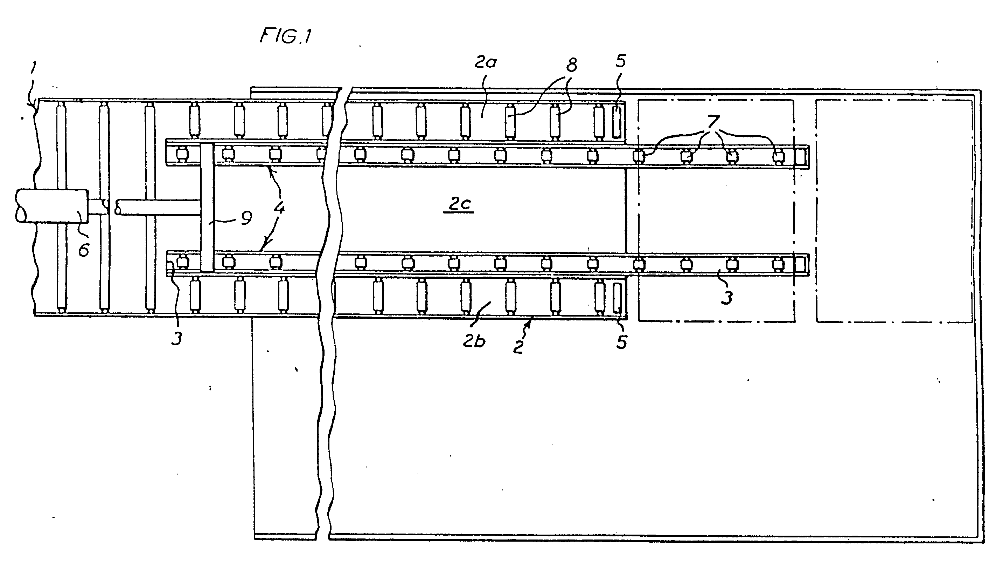

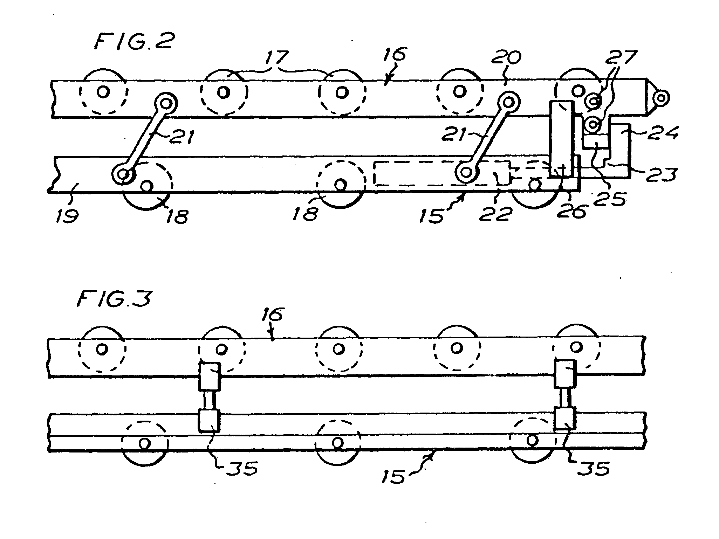

Fig. 1 in a fragmentary plan view shows an embodiment of the load-handling apparatus according to the invention, and Figs. 2 and 3 in fragmentary side views show two embodiments of a load-handling unit which can be included in the load-handling apparatus in Fig. 1.

Fig. 1 illustrates a load-handling apparatus according to the invention, which in the embodiment illustrated comprises two relatively movable parts. One part is a conveyer such as a roller conveyer 1 which has a fork-shaped front end conveyer section 2 comprising two or three parallel conveyor arms 2a, 2b, 2c which define a space or a pair of intervening grooves 3 for a fork-shaped conveyer extension 4 of the main conveyer 1. The conveyer extension 4 can be protracted and retracted with regard to the conveyer 1 and is in the form of a fork-shaped conveyer which preferably comprises a pair of connected conveyer units of the type which is illustrated in Fig. 2 and 3 and will be described in detail. The arms of the conveyer extension are movable in the space or spaces between the arms of the main conveyer 1. The main conveyer 1 has, for example at the outer end portions of its arms 2a, 2b raisable and lowerable abutments 5 which can be protracted to stop the conveyance of pallets or other goods and can be retracted for allowing the goods to advance to the conveyer extension 4. This conveyer extension 4 is movable in relation to the main conveyer 1 by means of a piston and cylinder unit 6 which may be of the hydraulic type and may have the form of a telescoping cylinder, if a large stroke length is desired. The arms 4a, 4b of the conveyer extension 4 are provided at their front ends with retractable abutments which may be the front rollers of the conveyer extension 4. In the normal position of the conveyer extension 4 its conveying rollers 7 are on a level with the rollers 8 of the main conveyer 1. It should be observed, however, that the main conveyer 1 can be of decreasing height towards the front end thereof, which applies also to the conveyer extension 4 which, however, as will be explained with reference to Fig. 2 and 5 in an embodiment can be lowered more at one end if an inclination is desired when the goods are discharged.

By raising the fork-shaped conveyer extension 4 to bring it to lift a pallet from the rollers 8 at the fork-shaped section 2 of the main conveyer 1, said paller can then be moved from the conveyer section 2 by means of the fork-shaped conveyer extension 4 by moving the latter forward by activation of the piston and cylinder unit 6. In the preferred embodiment the front abutments 5 on the main conveyer section 2 can be retractable or the abutments 5 may be sufficiently low to permit the conveyer extension 4 to lift the pallet over these abutments 5.

Fig. 2 shows an example of a conveyer and load-handling unit which may be used in the load-handling apparatus in Fig. 1. The unit in Fig. 2 comprises s subframe 15 and a conveyer 16 which is raisable and lowerable in relation to the subframe and may be in the form of a roller conveyer. One or more or all rollers 17 may be driven, e.g. by electric motors, and should preferably be drivable in opposite directions to permit both loading and unloading. The subframe 15 may be in the form of a carriage having a number of supporting rollers or wheels 18, which advantageously may also be arranged to be driven. The subframe 15 may include two laterally spaced beams 19 which should be interconnected only at the rear ends and not at the front (right-hand) ends shown in Fig. 2. The raisable conveyer 16 may fundamentally be of the same construction as its supporting subframe 15 and two units according to Fig. 4 may be connected at one end with means such as connecting means 9 in Fig. 4 to form the fork-shaped conveyer extension 4. The subframe 15 and the raisable conveyer 16 are interconnected by means of a number of longitudinally spaced levers or links 21 which are pivotally connected to both the subframe and the conveyer. These links 21 constitute draw links by means of which the conveyer 16 may be raised and lowered in relation to the subframe 15 by exerting a force on the conveyer 16 in the longitudinal direction with respect to the subframe 15. In the embodiment illustrated in Fig. 2 said force can be exerted by means of one or more hydraulic cylinders 22 which are supported in one or both beams 19 (which may be for example inverted U beams). The piston rod 23 has a head 24 which extends upwardly for exerting pressure against the underside of the corresponding conveyer beam 20 when the piston and the piston rod 23 are retracted into the cylinder 22. With the aid of a suitable stop means shown in the form of a stop abutment 26 secured to the subframe 15, and stop means 27 on the conveyer 20, which are adapted to cooperate with said stop abutment 26, the links 21 can be prevented from being raised into fully vertical position. This is advantageous in that lowering of the conveyer 16 (collapse of the load-handling apparatus) can be carried out by the weight of the conveyer 16 (or the weight of the conveyer 16 plus the weight of the load). In fully collapsed position of the load-handling apparatus the longitudinal beams of the conveyer 16, which may be in the form of inverted U-beams, can rest against the upper side of the subframe 15. When the conveyer 16 is lowered the head 24 of the piston rod is accommodated between the flanges of the corresponding U beam 20 of the conveyer 16, and the stop means 26 can be accommodated in a similar way or can lie at the outer side of the opposite beam 20. Of course, the means 24 and 26 shall not reach with their upper ends above the rollers 17 when the load-handling apparatus 19 is collapsed, in order not to preclude using the load-handling apparatus in the manner described in the following.

A pair of load-handling units according to Fig. 1 are intended to be connected to form the fork-shaped conveyer extension in Fig. 1 and should preferably be so dimensioned that the total height thereof, i.e. the height between the undersides of the wheels 18 of the subframe 15 and the upper sides of the rollers 17 of the conveyer 16, allows the introduction of the load-handling conveyer extension 4 in Fig. 1 with its arms 4a, 4b into such channels as are usually arranged in the subframes of pallets to facilitate handling of the pallets by forklift trucks, and more preferably the height is such that it will be possible to realize this introduction of the "fork" 4 of the load-handling apparatus in Fig. 1 when the pallets are positioned on a base.

When the load-handling apparatus is utilized for loading goods on a vehicle platform, the conveyer 16, i.e. each arm 4 of the conveyer extension 4 of the load-handling apparatus in Fig. 1, should be raised relative to the subframe 15 to a height sufficient to allow the pallets to go free from the vehicle platform when they are transferred to it. With the use of two load-handling apparatus or conveyer extensions 4 of the appropriate length for the vehicle platform the apparatus can simultaneously transfer two double rows of pallets with goods thereon. The conveyers 16, i.e. the arms 4a, 4b of the load-handling apparatuses in Fig. 1 are then lowered onto the respective subframes 15. In the preferred embodiment the dimensions of the load-handling unit in Fig. 2 shall be such that pallets or other goods can thereby be lifted from and lowered to rest on a vehicle platform. As a result the arms 4a, 4b of the conveyer extension of the load-handling apparatus can easily be withdrawn from the underside of a pallet, and it is even conceivable for the load-handling apparatuses to be withdrawn from the vehicle platform on their own support wheels 18 or by the conveyer rollers 17 if these are driven. When the rollers 17 in Fig. 2, that is the rollers 7 in Fig. 1, are to be used as transportation rollers the height positions of the conveyers 16, Fig. 2 or arms 4a, 4b, Fig. 1, are first so adjusted that the respective rollers 17 or 7 only engage the undersides of the pallets with driving friction while the pallets with the majority of their weight rest on the vehicle platform.

The load-handling unit schematically shown in Fig. 3, which is a modification of the embodiment of Fig. 2, differs from said embodiment in that as means for lifting the conveyer portion 16 in relation to the subframe portion 15 use is made of hydraulic cylinders 35 between these portions. It is readily seen from Fig. 3 that the conveyer 16 is raisable and lowerable in relation to the subframe 15 and that the conveyer 16 may be tilted by lifting one end to a higher level than the other end.

According to the invention, loading and unloading may be carried out by means of the apparatus which is moved such that the fork-shaped conveyer extension 4 when protracted is moved in over the platform. After transportation of the pallets from the rear end of the main conveyer to the conveyer arms 4a, 4b (Fig. 1), the upper conveyers 16 which forms upper part of the arms 4a, 4b, is lowered so that the pallets will stand on the platform and the apparatus or its fork-shaped extension 4 can be withdrawn. For moving the load-handling apparatus in over the vehicle platform and for returning the load-handling apparatus use may be made of for example a rack transmission, a hydraulic cylinder or other suitable means, instead of the wheels 18 of rollers 17.

To facilitate transfer of the fork-shaped load-handling apparatus to and from the vehicle platform the fork-shaped conveyer extension 4 preferably is of a construction which will permit articulation of its arms 4a, 4b so as not to jam when introduced into the channels beneath the pallets. It may also be suitable to use electronic guards, such as electromagnets or photocells, for guiding the load-handling apparatus onto the vehicle platform so that the pallets with goods or unitized loads thereon when transferred to the vehicle platform move in predetermined paths. To prevent injuries to person a supervising system (for example photoelectrical) may be required to prevent transfer of goods should obstacles (such as the operator's feet, legs etc.) appear in the conveyance path.

The load-handling apparatus described in the foregoing is very flexible as it can be adapted to most of the goods conveyance systems on the market for transport vehicles of various kinds, including so-called trailer trains (tractors with trailers or semi-trailers), for unitized load-handling on pallets of the type "Europa-pall", railway waggons etc.

The full effective loading height of the transport vehicles can be exploited because the pallets can be moved only some centimetres above the surface of the vehicle platform during the loading and unloading operations.

When the conveyer extension 4 with a pallet supported thereby has been advanced to a contemplated delivery poisition on for example a vehicle platform, the upper conveyer sections of the arms 4a, 4b, that is the upper conveyers 16 of the unit in Fig. 2 or Fig. 3, of the extension 4 are lowered with respect to the subframe, that is the subframe 15 in Fig. 2 or 3, for delivery of the goods. It should be observed that the pallet can in this case rest on the conveyer extension 4 with the longitudinal axis of the pallet extending transversely of the conveyer extension 4. The arms 4a, 4b of the conveyer extension can of course be used in the same way as has been described for the conveyers or units in Figs. 2 and 3.

Of course, it is possible to use, instead of hydraulic cylinders for moving the conveyer sections 1 and 4 in relation to each other, any suitable drive means and transmission means, such as chains, racks, gear wheels etc. and the conveyer described need not be roller conveyers.

## Claim

Load-handling apparatus comprising a pair of elongated load-handling members which for lifting and moving palletized or other goods are insertable from a supporting surface in a pair of through channels or equivalent openings of restricted width and height existing or arranged between the goods and the supporting surface for permitting insertion of the lift forks of a forklift truck of other lifting means beneath the goods, said load-handling members having the form of two substantially identical elongated parallel units (15, 16) each of which consists of a lower supporting section (15) and an upper lifting section (16) raisably and lowerably mounted on said supporting section, the lower supporting section (15) having supporting rollers (18) for supporting said apparatus movably on said supporting surface and said upper lifting section (16) having rollers (17) forming its upper surface for conveying goods along said upper surface, characterised in that the supporting sections (15) of the two units (15, 16) are interconnected at their one end portions by a transverse connecting device so that the load-handling apparatus forms a fork-like structure with the two units (15, 16) extending from the transverse connecting device in parallel with and laterally spaced from one another, that the lifting sections (16) of the two units (15, 16) are collectively raisable and lowerable, and that the fork-like load-handling apparatus (16c) forms an extension section of a telescopically extensible conveyer (16a, 16b, 16c).

## Revendication

Dispositif de chargement comprenant une paire d'éléments de chargement allongées qui pour le levage et le déplacement d'objets palletisés ou similaires peuvent être introduits à partir d'une surface de support dans une paire de passages ou ouvertures équivalentes de largeur et de hauteur limitées qui ont prévus entre les objets et la surface de support afin de permettre l'introduction des fourches d'un chariot élévateur à fourches ou autre moyen élévateur par-dessous les objets, lesdits éléments de chargement étant sous forme de deux unités (15, 16) sensiblement identiques, allongées et parallèles dont chacune est constituée d'une partie de support inférieure (15) et d'une partie de levage supérieure (16) montée sur ladite partie de support de façon à pouvoir être élevée et abaissée, ladite partie de support inférieure (15) comportant des rouleaux (18) pour supporter ledit dispositif de façon déplaçable sur ladite surface de support et ladite partie de levage supérieure (16) comportant des rouleaux (17) formant sa surface supérieure pour permettre de transporter des objets le long de cette surface supérieure, caractérisé par le fait que les parties de support (15) des deux unités (15, 16) sont reliées entre elles à l'une de leurs portions d'extrémité par un moyen de liaison transversal de façon que le dispositif de chargement forme une construction similaire à une fourche, les deux unités (15, 16) s'étendant à partir dudit moyen de liaison transversal parallèlement et espacées latéralement l'une par rapport à l'autre, que les parties de levage (16) des deux unités (15, 16) peuvent être élevées et abaissées ensemble et que le dispositif de chargement en fourche (16c) forme une partie d'allongement d'un convoyeur (16a, 16b, 16c) susceptible d'être alongé télescopiquement.

## Patentanspruch

Verladegerät, umfassend zwei langgestreckte Verladeglieder, die zum Heben und Fortbewegen von palletiertem oder anderem Gut von einer Stützfläche her in zwei Durchlässe oder gleichwertige Öffnungen begrenzter Breite und Höhe einführbar sind, die zwischen dem Gut und der Stützfläche vorgesehen sind, um das Unterfahren des Guts mit den Hubgabeln eines Gabelstaplers oder anderen Hubgeräts zu ermöglichen, wobei die genannten Verladeglieder die Form von zwei hauptsächlich identischen, langgestreckten, parallelen Stützteil (15) und einem heb- und senkbar auf diesem montierten, oberen Hubteil (16) bestehen, und wobei der untere Stützteil (15) Stützrollen (18) zur beweglichen Unterstützung des Verladegeräts auf der gennannten Stützfläche aufweist, während der obere Hubteil (16) Rollen (17) besitzt, die seine Oberfläche zum Transport von Gut längs dieser Oberfläche bilden, dadurch gekennzeichnet, dass die Stützteile (15) der beiden Einheiten (15, 16) an ihren einen Endteilen durch eine Querverbindung miteinander verbunden sind, derart, dass das Verladegerät eine gabelförmige Konstruktion bildet, in der sich die beiden Einheiten (15, 16) von der Querverbindung parallel und in seitlichem Abstand voneinander erstrecken, dass die Hubteile (16) der beiden Einheiten (15, 16) zusammen heb- und senkbar sind, und dass das gabelförmige Verladegerät (16c) einen Verlängerungsteil eines teleskopisch verlängerbaren Förderers (16a, 16b, 16c) bildet.

FIG.1

FIG.2

FIG.3